# EUROPEAN PATENT APPLICATION

(11) **EP 4 752 085 A1**
(43) Date of publication of application: **03.06.2026**
(21) Application number: 25218650.7
(22) Date of filing: 26.11.2025
(51) Int. Cl.: B65G 13/00

(54) **PALLET CONVEYOR ARRANGEMENT**

(30) Priority: 27.11.2024 EP 24215800
(71) Applicant: Interroll Holding AG, 6592 Sant'Antonino (CH)
(72) Inventor: Laplace, Jean-Michel, 41836 Hückelhoven (DE)
(74) Representative: Kohlhof, Stephan

(57) **Abstract**

Pallet conveyor arrangement (1), adapted to convey a pallet, comprising
a first arrangement section (2), in particular a pallet conveyor (2),
a second arrangement section (3), in particular a pallet loading section (3);
in particular the pallet loading section (3) forms an accommodation space (32) for accommodation of an external pallet transport device in particular a pallet jack;
wherein in an operating state the first arrangement section (2) and the second arrangement section (3) are arranged to each other so that a pallet can be transferred between the first arrangement section (2) and the second arrangement section (3);
wherein in a standby state the first arrangement section (2) and the second arrangement section (3) are arranged to each other so that a pallet can not be transferred between the first arrangement section (2) and the second arrangement section (3), in particular the second arrangement section (3) is disassembled from the first arrangement section (2).

## Description

The invention refers to a pallet conveyor arrangement.

A pallet conveyor is commonly used to convey pallets, which has a significant size and weight. The components of such an conveyor arrangement are adapted to convey objects which have a weight of at least 100 kg, in particular at least 500 kg.

To avoid damages to the objects and the conveyor arrangements, the objects are held separate to each other with the help of load separators and pallet stoppers.

Load separator systems and pallet stoppers disclosed in WO 2017/032456 A1, WO 2020/126391 A1, WO 2020/259913 A1.

DE 20 2004 010 400 U1 discloses a conveyor for pallets which is divided into two main sections with a movable segment that can be temporarily removed to create a level crossing. This segment can function as a flap that folds upward, a swing piece that rotates horizontally, or a sliding piece that shifts sideways. The design allows forklifts and other vehicles to pass without ramps or obstacles. It enables flexible warehouse layouts while maintaining full load capacity.

It is the task of the invention to provide an improved pallet conveyor arrangement.

The invention proposes a pallet conveyor arrangement according to claim 1. Embodiments are subject of the subclaims and the description.

The pallet conveyor arrangement is designed to convey a pallet. It comprises first and second arrangement sections, between which a pallet can be transferred.

In an embodiment the first arrangement section may be a pallet conveyor and the second arrangement section may be a pallet loading section. The pallet loading section forms an accommodation space for an external pallet transport device, particularly a pallet jack. The advantage of this arrangement is that it allows for efficient transfer of pallets between the conveyor and the external pallet transport device, facilitating smooth material handling operations.

In the operating state, the first and second arrangement sections are arranged so that a pallet can be transferred between them.

**In** an embodiment the first arrangement section arrangement includes a first attachment on the first arrangement section and a second attachment on the second arrangement section. **In** the operating state, the second attachment and the first attachment are connected to each other. This feature ensures that the second arrangement section is securely attached to the first arrangement section during operation, providing stability and alignment for accurate pallet transfer.

**In** an embodiment in the standby state, the second attachment and the first attachment are disconnected from each other. This allows the second arrangement section to be disassembled from or alternatively moved relative to the first arrangement section . The advantage here is the flexibility to remove the second arrangement section when not in use, freeing up space and allowing the space to be used for other purposes.

**In** an embodiment the pallet conveyor arrangement is characterized by a load separator. The load separator comprises a stopper and an activator. The stopper is adapted to stop the pallet in a blocking state and to not stop the pallet in a release state. The stopper is transferred between the blocking state and the release state based on a state of the activator. This ensures that pallets do not collide with each other, enhancing the safety and reliability of the conveyor system.

**In** an embodiment the stopper is located at a first one of the first arrangement section and the second arrangement section. The activator is located at a second one which is the other one of the second arrangement section and the first arrangement section. This configuration allows the activator to control the stopper from a different component, providing a modular and flexible design.

**In** an embodiment the pallet conveyor arrangement includes a first communication member and a second communication member. These are adapted to commonly communicate the state of the activator from the activator to the stopper. The first communication member is located at the first arrangement section and the second communication member is located at the second arrangement section. This allows for effective communication between the activator and the stopper, ensuring coordinated operation.

**In** an embodiment the first communication member comprises a first communication interface and the second communication member comprises a second communication interface. **In** the operating state, the first communication interface and the second communication interface are connected with each other so that the state of the activator can be transferred from the activator to the stopper. **In** the standby state, the first communication interface and the second communication interface are disconnected from each other. This feature provides a reliable communication link between the activator and the stopper during operation, and allows for disconnection when the system is not in use.

In an embodiment the first and the second communication interfaces are adapted to get in connection with each other in a self-aligning manner. This ensures that the communication interfaces can be easily connected without manual alignment, simplifying the assembly process and reducing the risk of misalignment.

A non-limiting example of the invention is described with respect to the figures; herein show
- fig. 1: a pallet conveyor arrangement according to the invention in perspective view;
- fig. 2: parts of the pallet conveyor arrangement according to figure 1 in perspective view;

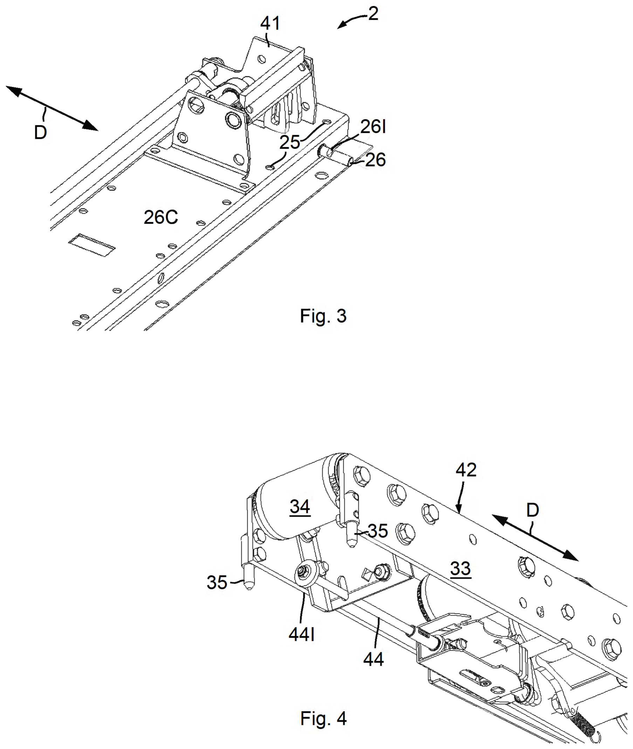

- fig. 3: parts of a pallet conveyor of the pallet conveyor arrangement of figure 1 in perspective view;
- fig. 4: parts of a pallet loading section of the pallet conveyor arrangement of figure 1 in perspective view;
- fig. 5: parts of the pallet conveyor and the pallet loading section of the pallet conveyor arrangement of figure 1 in side view during assembly;
- fig. 6: parts of the pallet conveyor and the pallet loading section of the pallet conveyor arrangement of figure 1 in side view after assembly with the communication interfaces not connected to each other;
- fig. 7: parts of the pallet conveyor and the pallet loading section of the pallet conveyor arrangement of figure 1 in side view after assembly with the communication interfaces connected to each other.

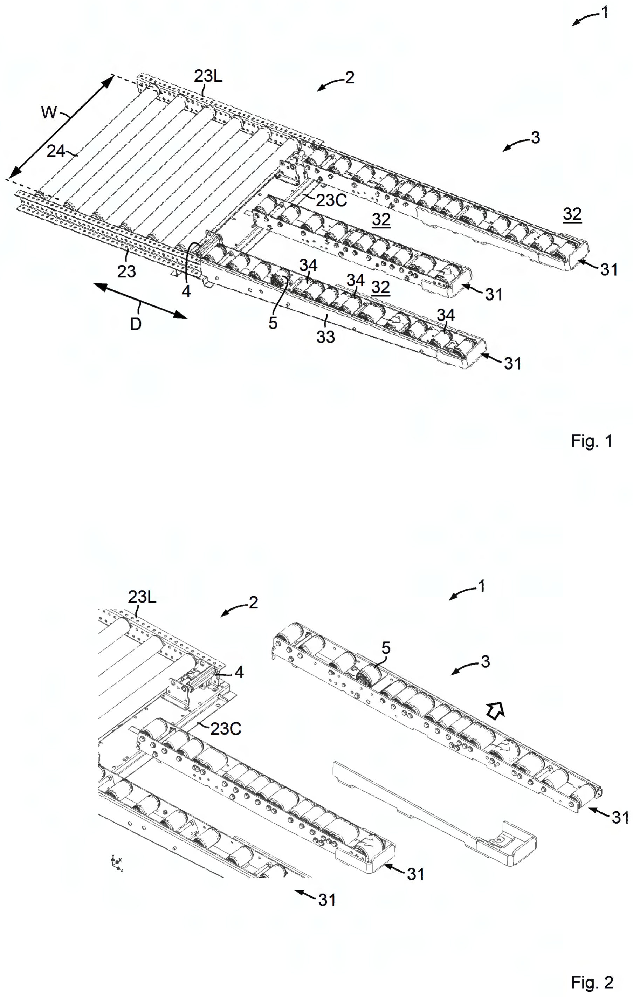

Figure 1 shows an inventive pallet conveyor arrangement 1. The pallet conveyor comprises a first arrangement section 2, which is in the present embodiment a pallet conveyor 2. The first arrangement section 2 has a frame structure 23, comprising two longitudinal frames 23L between which a plurality of conveyor rollers 24 are provided, and cross frame 23C, connecting the longitudinal frames 23L.

A conveying width W of the first arrangement section 2 is dimensioned in a manner, so that a pallet of a width of at least 800 mm can be conveyed along on first arrangement section 2. The rollers may be motor-driven or not-driven rollers. **In** particular the first arrangement section can be arranged at an inclination, so that a pallet can be driven by gravity (gravity roller lane). An axis of rotation of said conveyor rollers 24 is perpendicular to the conveying direction D.

Attached to an end of the first arrangement section 2, a second arrangement section 3 is provided, which is in the present example a pallet loading section 3. The second arrangement section 3 is located neighbored to the first arrangement section 2 view of a conveying direction D of the first arrangement section 2. **In** the present example a pallet can be moved to the second arrangement section 3 by an external pallet transport device, e.g. a pallet jack (not shown but in the figures, but shown e.g. in https://en.wikipedia.org/wiki/Pallet_jack).

The second arrangement section 3 comprises at least two, in particular three parallel roller sections 31, on which a pallet can come to rest. The roller sections 31 extend in the direction of the conveying direction D. Each roller section 31 comprises a section frame 33 on which a plurality of section rollers 34 are attached. An axis of rotation of said section rollers 34 is perpendicular to the conveying direction D.

Between the roller sections 31, an accommodation space 32 for the external transport device, e.g. pallet jack, is provided. **In** the accommodation space 32 the external transport device can extend with its wheels of other elements close to the floor, without being limited by the roller sections 31.

Figure 1 shows the second arrangement section 3 in an operating state. In the operating state the second arrangement section 3 is adapted to transfer a pallet between external transport device and first arrangement section 2, namely
- to take over the pallet from the external transport device and transfer the pallet to the first arrangement section 2; and/or
- to take over the pallet from the first arrangement section 2 and to transfer the pallet to the external transport device.

Figure 2 shows parts of the pallet conveyor arrangement 1 in a situation, where the second arrangement section 3 is transferred into a standby state. In the standby state the roller sections 31 may disassembled from the first arrangement section 2 and can be transferred into a standby location distant to the first arrangement section 2. The space formerly occupied by the second arrangement section can now be used for other purposes. In another embodiment, the second arrangement section 3 may be not disassembled but swiveled or in any other way moved relative to the first arrangement section 2, makes it impossible to transfer the pallet between the first arrangement section 2 to the second arrangement section 3.

The pallet conveyor arrangement 1 comprises a load separator 4 adapted to avoid that pallets collide which each other. The load separator 4 comprises a stopper 41 and an activator 42. The stopper 41 is in a blocking state adapted to prevent the movement of a pallet along the stopper 41. In a release state the stopper 41 is adapted to let the pallet pass the stopper 41.

The functionality of the stopper 41 is controlled by said activator 42. The stopper 4 is switched between the blocking state and the release state depending on a state of the activator 42.

**In** the present example, the activator 42 comprises a spring supported activator roller 42R, which can be lifted and lowered, depending if there is a pallet located in the area of the activator 42 or not. Instead of the activator roller 42R, there may provided be any other suitable activator means detecting the presence of a pallet.

**In** case that a pallet is located at the activator 42, the stopper 41 is held in the stop position, to prevent a collision of two pallets. As soon as the pallet leaves the area of the activator 42, the stopper 41 is transferred in the release state and the pallet can pass the position of the stopper. In an embodiment there may be provided a delay mechanism delaying the transfer into the release state.

The information about the state of the activator 42 is transferred to the stopper 41 by means of mechanical communication members 43, 44.

**In** the present example, the stopper 41 is located at the first arrangement section 2 and the activator 42 is located at the second arrangement section 3. In another embodiment also covered by the invention but not shown in the figures, the activator 42 is located at the first arrangement section 2 and the stopper 41 is located at the second arrangement section 3.

As stated above, the second arrangement section 3 can be disassembled from the first arrangement section. Therefore
- the second arrangement section 3 has a second attachment 35, e.g. in the form two attachment pins 35;
- the first arrangement section 2 has a first attachment 25, e.g. in the form two pin receptacles 25.

**In** the operating state the first attachment 25 is attached to the second attachment 35 and for disassembly the first attachment 25 is released from the second attachment 35. The attachments are adapted to ensure, that in the operating state the second arrangement section 3 and the first arrangement section 2 are in a defined orientation to each other.

Disassembling the second arrangement section 3 from the first arrangement section 2 means also that the components of the load separator may be separated from each other.

The load separator 4 according to the inventive arrangement comprises a first mechanical communication member 43 attached to the first arrangement section 2 and a second mechanical communication member 44 attached to the second arrangement section 3, where the first mechanical communication member 43 is separate to the second mechanical communication member 44. The first mechanical communication member 43 has a first communication interface 431 and the second mechanical communication member 44 has a second communication interface 44I.

**In** the operating state the second communication interface 44I is connected with the first communication interface 431, so that a uninterrupted communication means is established between the activator 42 and the stopper 41. In the standby state the second communication interface 44I is separated from the first communication interface 43I, meaning also, that the communication means between the activator 42 and the stopper 41 is interrupted (which is acceptable, since the functionality is nevertheless obsolete).

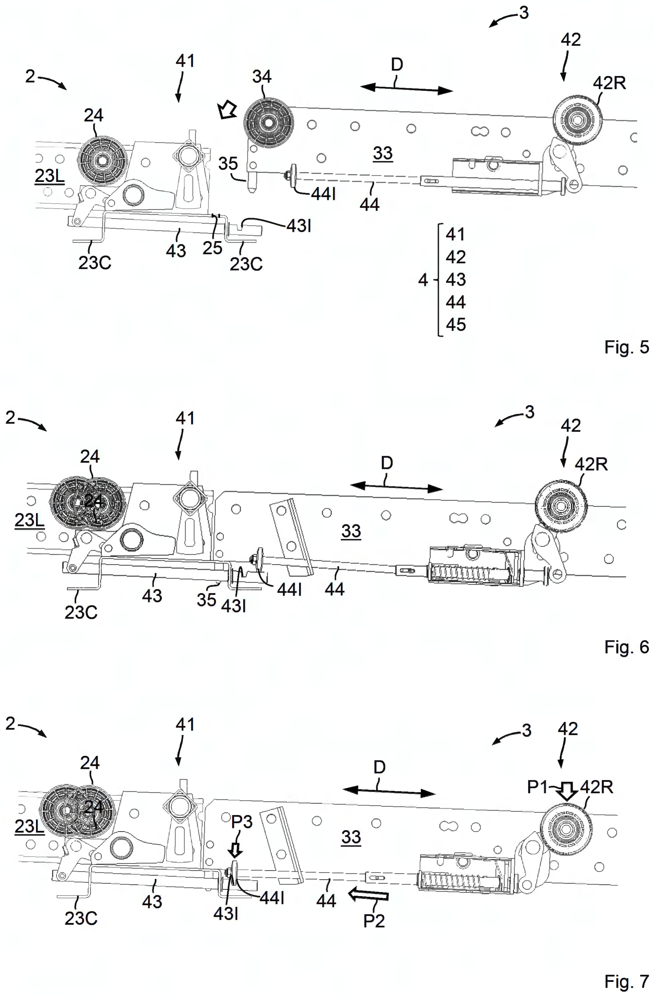

**In** figure 6 the pallet conveyor arrangement 1 is in the assembled state, thereby the second arrangement section 3 is attached to the first arrangement section 2, where the first attachment 25 is attached with the second attachment 35. In this situation the first communication interface 431 is not connected to the second communication interface 44I yet. By simply activating the activator 42 once (see figure 7, arrow P1), the first communication interface 43I gets in connection with the second communication interface 44I (arrows P2, arrow P3) in a self-aligning manner.

### List of reference signs

- 1: pallet conveyor arrangement

- 2: first arrangement section / pallet conveyor
- 23L: longitudinal frame
- 23C: cross frame
- 24: conveyor roller
- 25: first attachment / pin receptable

- 3: second arrangement section / pallet loading section
- 31: roller section
- 32: accommodation space for pallet jack
- 33: section frame
- 34: section roller
- 35: second attachment / attachment pin

- 4: load separator
- 41: stopper
- 42: activator
- 42R: activator roller
- 43: first communication member
- 431: first communication interface
- 44: second communication member
- 441: second communication interface
- W: conveying width
- D: conveying direction

## Claims

1. Pallet conveyor arrangement (1), adapted to convey a pallet, comprising a first arrangement section (2), in particular a pallet conveyor (2),
a second arrangement section (3), in particular a pallet loading section (3);
in particular the pallet loading section (3) forms an accommodation space (32) for accommodation of an external pallet transport device in particular a pallet jack; wherein in an operating state the first arrangement section (2) and the second arrangement section (3) are arranged to each other so that a pallet can be transferred between the first arrangement section (2) and the second arrangement section (3);
characterized that
in a standby state the first arrangement section (2) and the second arrangement section (3) are arranged to each other so that a pallet can not be transferred between the first arrangement section (2) and the second arrangement section (3), in particular the second arrangement section (3) is disassembled from the first arrangement section (2).

2. Pallet conveyor arrangement (1) according to the preceding claim,
**characterized in**
**that** the first arrangement section (2) has a first attachment (25), and
**that** the second arrangement section (3) has a second attachment (35);
wherein in the operating state the second attachment (35) and the first attachment (25) are connected to each other.

3. Pallet conveyor arrangement (1) according to any of the preceding claims, **characterized in**
**that** the first arrangement section (2) has first attachment (25), and
**that** the second arrangement section (3) has a second attachment (35);
wherein in the standby state the second attachment (35) and the first attachment (25) are disconnected to each other.

4. Pallet conveyor arrangement (1) according to any of the preceding claims, **characterized by**
a load separator (4), the load separator (4) comprising
- a stopper (41) and
- an activator (42);
wherein the stopper (41) is adapted to stop the pallet in a blocking state and to not stop the pallet in a release state;
wherein the stopper (41) is transferred between the blocking state and the release state based on a state of the activator (42).

5. Pallet conveyor arrangement (1) according to the preceding claim,
**characterized in**
**that** the stopper (41) is located at a first one of the first arrangement section (2) and the second arrangement section (3),
**that** the activator (42) is located at a second one which is the other one of the second arrangement section (3) and the first arrangement section (2).

6. Pallet conveyor arrangement (1) according to claim 4 or 5,
**characterized by**
a first communication member (43) and a second communication member (44) adapted to commonly communicate the state of the activator (42) from the activator (42) to the stopper (41);
wherein the first communication member (43) is located at the first arrangement section (2) and the second communication member (44) is located at the second arrangement section (3).

7. Pallet conveyor arrangement (1) according to the preceding claim,
**characterized in**
**that** the first communication member (43) comprises a first communication interface (431) and the second communication member (44) comprises a second communication interface (441),
wherein in the operating state the first communication interface (43I) and the second communication interface (44I) are connected with each other so that the state of the activator can be transferred from the activator (42) and the stopper (41),
and in the standby state the first communication interface (431) and the second communication interface (44I) are disconnected from each other.

8. Pallet conveyor arrangement (1) according to the preceding claim,
**characterized in**
**that** the first and the second communication interfaces (43I, 44I) are adapted to get in connection with each other in a self-aligning manner.
